# EUROPÄISCHE PATENTSCHRIFT

(11) **EP 2 522 918 B1**
(45) Veröffentlichungstag und Bekanntmachung des Hinweises auf die Patenterteilung: **02.04.2014**
(21) Anmeldenummer: 12167097.0
(22) Anmeldetag: 08.05.2012
(51) Int. Cl.: F24D 11/00, F24D 19/10

(54) **Verfahren zum Betrieb einer Heizungsanlage**
Method for operating a heating assembly
Procédé de fonctionnement d'une installation de chauffage

(30) Priorität: 13.05.2011 DE 102011101605
(43) Veröffentlichungstag der Anmeldung: 14.11.2012
(73) Patentinhaber: Viessmann Werke GmbH & Co. KG, 35108 Allendorf (DE)
(72) Erfinder: Reinhard, Osterloh, 59955 Winterberg (DE); Michael, Handt, 35066 Frankenberg (DE)
(74) Vertreter: Wolf, Michael

(56) Entgegenhaltungen:
- CH-A5- 692 217
- DE-A1- 19 817 414
- DE-A1-102006 034 214
- US-A1- 2011 041 833

## Beschreibung

Die Erfindung betrifft ein Verfahren zum Betrieb einer Heizungsanlage gemäß dem Oberbegriff des Patentanspruchs 1.

Ein Verfahren der eingangs genannten Art ist nach der DE 10 2006 034 214 A1 bekannt. Bei diesem Verfahren wird in einem Wärmespeicher (in diesem Fall ein Solarspeicher) gespeicherte Wärme zur Unterstützung eines Wärmeerzeugers (in diesem Fall ein Heizkessel) dann einem Heizkreis des Wärmeerzeugers zugeführt, wenn im Wärmespeicher, der mit Heizkreismedium befüllt ist, abzüglich eines vorgegebenen Hysteresewertes eine höhere Temperatur als am Rücklauf des Heizkreises festgestellt wird. Der Sinn dieses Verfahrens besteht dabei darin, im Wärmespeicher gespeicherte Wärme nicht nur zur Brauchwassererwärmung, sondern auch zur Raumheizung zu nutzen.

Der Erfindung liegt die Aufgabe zugrunde, ein Verfahren der eingangs genannten Art zu verbessern.

Diese Aufgabe ist mit einem Verfahren der eingangs genannten Art durch die im Kennzeichen des Patentanspruchs 1 aufgeführten Merkmale gelöst.

Nach der Erfindung ist also vorgesehen, dass der Wärmeerzeuger bei laufender Unterstützung durch den Wärmespeicher nur dann eingeschaltet wird, wenn eine aus dem Heizkreis geforderte Solltemperatur (Kesselsolltemperatur) größer als eine im Wärmespeicher herrschende Temperatur ist.

Mit anderen Worten besteht die erfindungsgemäße Verfahrensmaßgabe in einer so genannten Nachheizunterdrückung, die gewährleistet, dass der Wärmeerzeuger bei laufender Heizungsunterstützung durch den Wärmespeicher nur dann eingeschaltet wird, wenn im Wärmespeicher nicht mehr genug Wärme zur Verfügung steht, um den Forderungen aus dem Heizkreis (zu erbringende Solltemperatur) gerecht zu werden.

Diese Lösung hat dabei folgenden Vorteil: Befindet sich die Anlage in einem Betriebszustand, bei dem im Wärmespeicher gespeicherte Wärmeenergie dem Heizkreis zugeführt werden kann (so genannte "Heizungsunterstützung"), so stellt die erfindungsgemäße Maßgabe sicher, dass der Wärmeerzeuger ausgeschaltet bleibt, obwohl eine vom Heizkreis bzw. der Heizungsregelung geforderte Solltemperatur normalerweise (also ohne die erfindungsgemäße "Nachheizunterdrückung") das Einschalten des Wärmeerzeugers zur Folge hätte. Damit ist also gewährleistet, dass der Wärmeerzeuger bei laufender Heizungsunterstützung tatsächlich nur dann eingeschaltet wird, wenn die im Wärmespeicher gespeicherte Wärmeenergie nicht ausreicht, um den Wärmeanforderung aus dem Heizkreis gerecht zu werden.

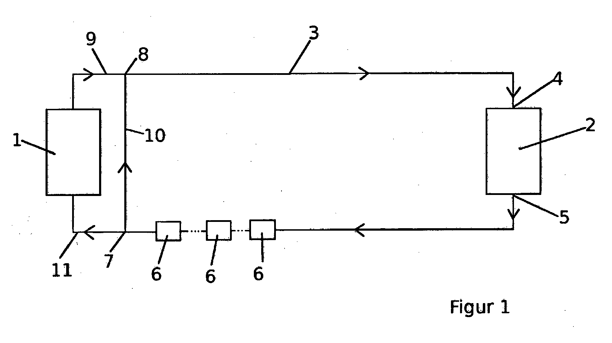

Der Vollständigkeit halber wird noch auf die DE 198 17 414 A1 hingewiesen:
Anspruch 1 und Figur 1 dieser Schrift zeigen ein Verfahren, bei dem es um die im Wärmespeicher vorhandene Wärme geht und bei dem der Wärmespeicher ausgekoppelt wird, wenn in diesem kein ausreichendes Wärmepotential vorhanden ist. Der Wärmeerzeuger ist bei diesem Ausführungsbeispiel stets eingekoppelt.
Anspruch 4 und Figur 2 dieser Schrift zeigen ein Verfahren, bei dem es um die vom Heizkörper (Wärmeverbraucher) benötigte Wärme geht und bei dem der Wärmeerzeuger ausgekoppelt wird, wenn im Wärmespeicher ein ausreichendes Wärmepotential vorhanden ist.
Der Wärmespeicher ist bei diesem Ausführungsbeispiel stets eingekoppelt.

In Figur 3 dieser Schrift ist schließlich die Kombination der Ansprüche 1 und 4 dargestellt, d. h. es wird wahlweise der Wärmespeicher ausgekoppelt, wenn in diesem kein ausreichendes Wärmepotential vorhanden ist, oder der Wärmeerzeuger wird ausgekoppelt, wenn im Wärmespeicher ein ausreichendes Wärmepotential vorhanden ist.

Die hydraulische Auskopplung des Wärmeerzeugers ist allerdings nicht mit einer gezielten Sperrung des Wärmeerzeugers im Sinne der erfindungsgemäßen Lösung gemäß Patentanspruch 1 gleichzusetzen, da die Regelung des Wärmeerzeugers gemäß der DE 198 17 414 A1 trotz der hydraulischen Auskopplung des Wärmeerzeugers aus dem Heizkreis weiterhin durch kurze Brennerstarts dafür sorgt, dass die Kesseltemperatur des Wärmeerzeugers ausreichend hoch ist, um erforderlichenfalls nach einer Wiedereinkopplung sofort die erforderliche Wärmemenge liefern zu können. Der Wärmeerzeuger gemäß der DE 198 17 414 A1 wird somit zwar aus dem Heizkreis ausgekoppelt, sein Einschalten wird aber nicht - wie bei der vorliegenden Erfindung - aktiv unterdrückt, wenn im Wärmespeicher ein ausreichendes Wärmepotential vorhanden ist.

Das Dokument DE 198 17 414 A1 offenbart den Oberbegriff des Anspruchs 1.

Das erfindungsgemäße Verfahren wird nachfolgend exemplarisch anhand der zeichnerischen Darstellung eines bevorzugten Ausführungsbeispiels näher erläutert.

Es zeigt
- Figur 1: einen Schaltplan der erfindungsgemäßen Heizungsanlage.

Die in Figur 1 dargestellte Heizungsanlage besteht, wie bereits erwähnt, insbesondere aus einem Heizkreis 3. Dieser weist einen so genannten Rücklauf bzw. Rücklaufanschluss 4 auf, über den er hydraulisch mit dem Wärmeerzeuger 2 (bevorzugt ein Heizkessel, insbesondere Öl-, Gas- oder Festbrennstoffheizkessel) verbunden ist. Vom Wärmeerzeuger 2 erwärmtes Heizkreismedium wird über den so genannten Vorlauf bzw. Vorlaufanschluss 5 in den Heizkreis zurückgeführt. Auf den Vorlauf folgen dann typischer Weise eine Reihe von in Räumen eines Gebäudes angeordneten Heizkörpern 6, die vom erhitzen Heizkreismedium durchströmt werden, das dabei seine Wärme (an die Räume) abgibt. Nach dem letzten Heizkörper 6 folgt dann ein Ventil (Wärmeverteileinrichtung 7), insbesondere Umschaltventil, besonders bevorzugt ein Dreiwege-Schaltventil, mit dem das Heizkreismedium wahlweise direkt (über einen entsprechenden Bypass) zurück zum Rücklaufanschluss 4 des Wärmeerzeugers 1, der beim Betrieb der Heizungsanlage stets vom Heizkreismedium durchströmt wird, oder in den Wärmespeicher 1 geleitet wird. Der bevorzugt als Solarspeicher ausgebildete Wärmespeicher 1 ist dabei, was nicht extra dargestellt ist, thermisch mit einem oder mehreren Sonnenkollektoren verbunden und dient zur Speicherung der aufgenommenen Solarenergie. Der Wärmespeicher 1 ist hierzu mit dem auch durch den Heizkreis 3 strömenden Heizkreismedium befüllt.

Wie ebenfalls bereits erwähnt, wird der Wärmespeicher 1 über das Ventil (die Wärmeverteileinrichtung 7) dann in den Heizkreis 3 eingekoppelt, wenn im Wärmespeicher 1 abzüglich eines vorgegebenen (vom Benutzer einstellbaren) Hysteresewertes eine höhere Temperatur als am Rücklauf des Heizkreises 3 festgestellt wird. Die Maßgabe bezüglich des "vorgegebenen Hysteresewertes" bringt dabei zum Ausdruck, dass die Einkoppelung zum Beispiel erst dann erfolgen soll bzw. erfolgt, wenn die Temperatur im Wärmespeicher 5°C größer/höher als die Temperatur am Rücklauf ist. Auf diese Weise soll vermieden werden, dass die Einkoppelung bereits dann erfolgt, wenn zum Beispiel nur 1°C Temperaturdifferenz zwischen dem Wärmespeicher 1 und dem Rücklauf feststellbar ist. Theoretisch, wenn auch technisch nicht sinnvoll, könnte der genannte Hysteresewert (über eine entsprechende Einstellung an der Regelung der Heizungsanlage) aber auch auf 0°C festgelegt werden, d. h. die Einkoppelung würde erfolgen, sobald die Temperatur im Wärmespeicher 1 minimal größer als die Temperatur am Rücklauf ist.

Wie weiterhin aus Figur 1 ersichtlich, weist der Heizkreis 3 neben dem Ventil (der Wärmeverteileinrichtung 7) bzw. der entsprechenden Verzweigung am anderen Ende des so gebildeten Bypasses eine Strömungsführung 8 auf, an der eine vom Wärmespeicher 1 kommende Rohrleitung 9 mit einer vom Bypass bzw. vom Ventil kommenden Rohrleitung 10 zusammengeführt ist, wobei diese Zusammenführung dann direkt in den Rücklaufanschluss 4 mündet. An dieser Strömungsführung 8 sind dabei entsprechende, an sich bekannte Elemente vorgesehen, die insbesondere dafür sorgen, dass aus dem Bypass kommendes Heizkreismedium nicht in den Wärmespeicher 1 zurückfließen kann.

Für den Betrieb der erfindungsgemäßen Heizungsanlage, bei dem ein Wärmespeicher 1 zur Unterstützung eines Wärmeerzeugers 2, wie erwähnt, dann in einen Heizkreis 3 des Wärmeerzeugers 2 eingekoppelt wird, wenn im Wärmespeicher 1 abzüglich eines vorgegebenen Hysteresewertes eine höhere Temperatur als am Rücklauf des Heizkreises 3 festgestellt wird, ist nun wesentlich, dass der Wärmeerzeuger 2 bei laufender Unterstützung durch den Wärmespeicher 1 nur dann eingeschaltet wird, wenn eine aus dem Heizkreis 3 geforderte Solltemperatur (Kesselsolltemperatur) größer als eine im Wärmespeicher 1 herrschende Temperatur ist. Oder nochmals in anderen Worten: Ein Einschalten des Wärmeerzeugers 2 bei laufender Unterstützung durch den Wärmespeicher 1 wird aktiv unterdrückt, wenn eine im Wärmespeicher 1 herrschende Temperatur größer als eine aus dem Heizkreis 3 geforderte Solltemperatur ist.

Wie eingangs erwähnt, ist durch diese Maßgabe gewährleistet, dass der zu jedem Betriebszeitpunkt hydraulisch in den Heizkreis 3 eingekoppelte Wärmeerzeuger 2 (Heizkessel, insbesondere Brenner des Heizkessels) nur dann eingeschaltet wird, wenn die im Wärmespeicher 1 gespeicherte Energie allein nicht ausreicht, um die geforderte Solltemperatur (am Vorlauf) zu erbringen. Erfindungsgemäß wird somit dafür Sorge getragen, stets zunächst die gespeicherte Energie (insbesondere Solarenergie) zu nutzen und die Energie aus fossilen Brennstoffen über den Wärmeerzeuger 2 nur dann einzufordern, wenn nicht genügend Energie im Wärmespeicher 1 gespeichert ist.

### Bezugszeichenliste

- 1: Wärmespeicher
- 2: Wärmeerzeuger
- 3: Heizkreis
- 4: Rücklaufanschluss
- 5: Vorlaufanschluss
- 6: Heizkörper
- 7: Wärmeverteileinrichtung
- 8: Strömungsführung
- 9: Rohrleitung
- 10: Rohrleitung
- 11: Rohrleitung

## Patentansprüche

1. Verfahren zum Betrieb einer Heizungsanlage, bei dem in einem Wärmespeicher (1) gespeicherte Wärme zur Unterstützung eines Wärmeerzeugers (2) dann einem Heizkreis (3) des Wärmeerzeugers (2) zugeführt wird, wenn im Wärmespeicher (1) abzüglich eines vorgegebenen Hysteresewertes eine höhere Temperatur als am Rücklauf des Heizkreises (3) festgestellt wird,
**dadurch gekennzeichnet,**
**dass** der Wärmeerzeuger (2) bei laufender Unterstützung durch den Wärmespeicher (1) nur dann eingeschaltet wird, wenn eine aus dem Heizkreis (3) geforderte Solltemperatur größer als eine im Wärmespeicher (1) herrschende Temperatur ist.

2. Verfahren nach Anspruch 1,
**dadurch gekennzeichnet,**
**dass** der Hysteresewert einstellbar ist.

3. Verfahren nach Anspruch 1 oder 2,
**dadurch gekennzeichnet,**
**dass** als Wärmespeicher (1) ein Solarspeicher verwendet wird.

## Claims

1. A method for operating a heating system in which heat stored in a heat accumulator (1) for supporting a heat generator (2) is then fed to a heating circuit (3) of the heat generator (2) if a temperature minus a predetermined hysteresis value is detected in the heat accumulator (1) that is higher than a temperature at the return of the heating circuit (3),
**characterized in**
**that** during ongoing support by the heat accumulator (1), the heat generator (2) is switched on only if a target temperature demanded from the heat circuit (3) is higher than a temperature prevailing in the heat accumulator (1).

2. The method according to claim 1,
**characterized in**
**that** the hysteresis value is adjustable.

3. The method according to claim 1 or claim 2,
**characterized in**
**that** a solar storage unit is used as a heat accumulator (1).

## Revendications

1. Procédé de fonctionnement d'une installation de chauffage, dans lequel la chaleur accumulée dans un accumulateur de chaleur (1) est, afin d'assister un générateur de chaleur (2), ensuite alimentée dans un circuit de chauffage (3) du générateur de chaleur (2), quand il est constaté dans l'accumulateur de chaleur (1) une température plus élevée minorée d'une valeur d'hystérésis prédéterminée que dans le retour du circuit de chauffage (3),
**caractérisé en ce que**
le générateur de chaleur (2) quand il est activement assisté par l'accumulateur de chaleur (1) est seulement mis en servie quand une température de consigne requise par le circuit de chauffage (3) est plus grande qu'une température prédominante dans l'accumulateur de chaleur (1).

2. Procédé selon la revendication 1,
**caractérisé en ce que**
la valeur d'hystérésis est réglable.

3. Procédé selon les revendications 1 ou 2,
**caractérisé en ce que**
un accumulateur solaire est employé comme accumulateur de chaleur (1).
